# EUROPEAN PATENT APPLICATION

(11) **EP 2 560 320 A2**
(43) Date of publication of application: **20.02.2013**
(21) Application number: 12179750.0
(22) Date of filing: 08.08.2012
(51) Int. Cl.: H04L 9/32

(54) **DIGITAL SIGNATURE MANAGEMENT AND VERIFICATION SYSTEM AND METHOD FOR DISTRIBUTED SOFTWARE**

(30) Priority: 15.08.2011 US 201113209920
(71) Applicant: General Electric Company, Schenectady, NY 12345 (US)
(72) Inventor: Lakshminarayanan, Sitaraman Suthamali, Atlanta, GA Georgia 30339-8402 (US)
(74) Representative: Williams, Andrew Richard

(57) **Abstract**

A digital signature management system (100) for distributed software applications includes a communication network (104) and a digital signature module (160) coupled to the communication network. The system also includes one or more software applications (106, 108, 110) coupled to the communication network that each include an identification code and a signature application (127) that intercepts a digitally signed message received from a sending application and provides it to the digital signature module. The digital signature module can be configured to verify the digital signature of messages it receives from the one more software applications.

## Description

### BACKGROUND OF THE INVENTION

The subject matter disclosed herein relates to security and, in particular, to generating and verifying digital signature in a system that includes distributed software.

A "Smart Grid" overlays an electrical grid and can provide information and operational commands between an electricity producer, such as a public utility company, and smart meters located at a customer dwelling or other locations (e.g., power sub-stations) along the electrical grid. The smart grid can be set up such that it includes distributed software applications (e.g., in a service oriented architecture (SOA)) in a distributed system.

In such distributed system, it is important to ensure that the integrity of messages exchanged between different software application or hardware elements is maintained. One approach to ensuring message integrity is to utilize digital signatures. Digital signatures require that each software application have the ability to generate and verify signatures, create public/private key pairs and distribute public keys to messages recipients. One problem that can arise in a distributed system is that each software application may generate and verify signatures in different manners. Further, even if each of the software applications generated and authenticated signatures in the same manner, keys must still be distributed around the system.

In a typical system, public/private key pairs are distributed in a public key infrastructure (PKI) where public keys are bound to their respective user identities by means of a certificate authority (CA). However, in a large-scale application or in a dynamic environment where there are multiple systems communicating between each other, key management gets complicated. The complications are further exacerbated when the communication occurs across differing hardware/software/technology platforms.

### BRIEF DESCRIPTION OF THE INVENTION

According to one aspect of the invention, a digital signature management system for distributed software applications is disclosed. The system of this aspect includes a communication network and a digital signature module coupled to the communication network. The system also includes one or more software applications coupled to the communication network, each including an identification code and a signature application that intercepts a digitally signed message received from a sending application and provides it to the digital signature module. In this aspect, the digital signature module is configured to verify the digital signature of messages it receives from the one more software applications.

According to another aspect of the present invention, a digital signature management system for distributed software applications is disclosed. In this aspect the system includes a communication network and a digital signature module coupled to the communication network. The system also includes one or more software applications coupled to the communication network that each include an identification code and a signature application that requests that the digital signature module signs messages on behalf of the software application. In this aspect, the digital signature module is configured to sign messages it receives from a one of the one more software applications based on a private key associated with the one of the one or more software applications.

According to another aspect of the present invention, a method of authenticating digital signatures in a distributed computing system including distributed software applications is disclosed. The method of this embodiment includes: receiving, at a digital signature module, a digitally signed message from a first software application, the digitally signed message including a digital signature that identifies a second software application; authenticating the digital signature at the digital signature module based on a public key related to the second software application; and returning the digitally signed message to the first software application. In this aspect, the public key is received from a key management system operated on a different server than the first software application.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 illustrates a system according to an embodiment of the present invention;
FIG. 2 is a flow chart illustrating a method according to one embodiment of the present invention;
FIG. 3 is a flow chart illustrating a method according to another embodiment of the present invention; and
FIG. 4 illustrates a system on which embodiments of the present invention may be implemented.

The detailed description explains embodiments of the invention, together with advantages and features, by way of example with reference to the drawings.

### DETAILED DESCRIPTION OF THE INVENTION

Embodiments of the present invention are directed to systems and methods to provide for generating and validating signatures in a distributed system that includes distributed software. An example of a distributed system in which embodiments of the present invention can be utilized is a smart grid. In one embodiment, a centralized digital signature service is utilized to generate and verify signatures for some or all of the software applications in the distributed system. A centralized key management system can also be provided to distribute the public/private key pairs required to generate/verify a digital signature.

A beneficial effect of the present invention is that it allows disparate software applications in a distributed system to generate and validate signatures in the same manner.

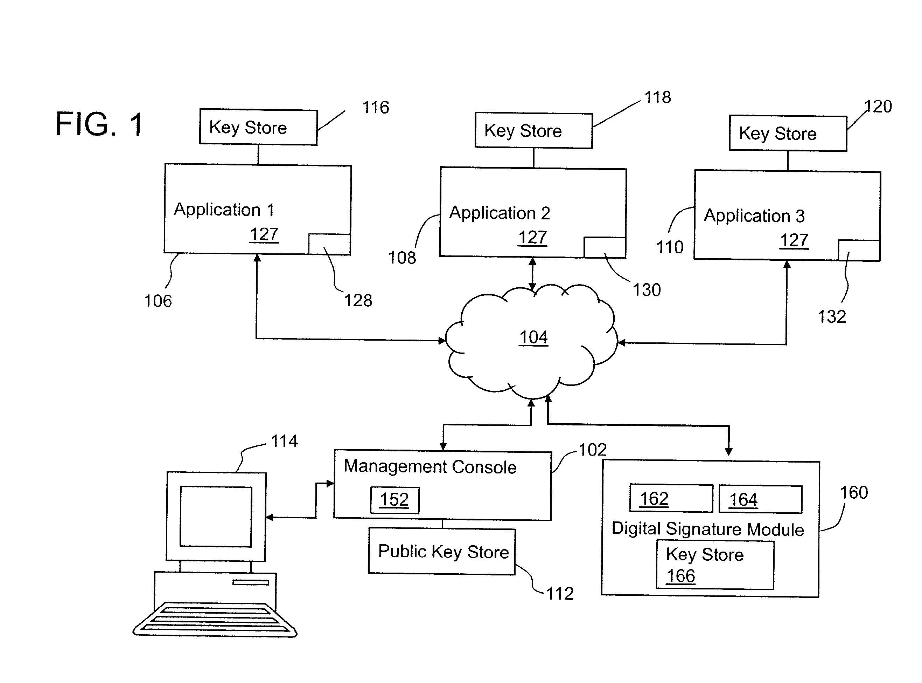

FIG. 1 illustrates a distributed system 100 according to one embodiment. The distributed system 100 includes a key pair management console (management console) 102 and a digital signature module 160. As described in greater detail below, the management console 102 manages the distribution of key pairs among the software applications in the system 100. As such, the management console 102 is a PKI management console in one embodiment. In one embodiment, keys are provided to individual software applications, rather than to the server on which the application is resident. The management console 102 can be implemented in a server or other computing device.

The digital signature module 160 is utilized to generate and validate digital signatures for software applications in the system 100. To that end, the digital signature module 160 includes, in one embodiment, a signature generation module 162 and signature validation module 164. Based on a request from the software application in the system 100, the signature generation module 162 can generate a signature for a message to be sent by the application. Similarly, a software application receiving a signed message can utilize the signature validation module 164 to validate the signature.

The system 100 illustrated in FIG. 1 also includes a communication network 104. The communication network 104 can be any type of communication network now known or later developed. For example, the communication network 104 can be the Internet, a private network, a local area network (LAN) or a wide area network (WAN). It shall be understood that the communication network 104 can include more than one network. For example, the communication network 104 can include a LAN in communication with a WAN in one embodiment. In another embodiment, the communication network 104 can include an internal bus within a single server and any combination of other networks. Such an embodiment may exist in the event that one or more software applications are resident on a same server.

The system 100 also includes a plurality of software applications 106, 108, 110. The software applications 106, 108, 110 are communicatively coupled to the communication network 104 such that they can communicate with one another through the management console 102 and the digital signature module 160. Of course, the digital signature module 160 and the management console 102 can communicate with one another through the communication network 104. The number of software applications 106, 108, 110 in the system 100 is variable, not limited, and depends on the context. The software applications 106, 108, 110 can all be located on different servers in one embodiment. In another embodiment, at least one software application 106, 108, 110 is located on a same server as another software application 106, 108, 110.

In one embodiment, one or more of the software applications 106, 108, 110 may need to communicate encrypted information to and receive encrypted information from another one of the software applications 106, 108, 110. In such an embodiment, the software applications 106, 108, 110 need to exchange public keys with one another. The management console 102 generally handles distribution of keys between the applications as described below.

It shall be understood the software applications 106, 108 and 110 may also need to send digitally signed messages to one another. For example, assume software application 106 needs to send a digitally signed message to software application 108. In the prior art, software application 106 would sign a message sent to software application 108 with its private key. Software application 108 would then verify the signature using the public key. Of course, such a system would require that the public keys be distributed. However, in some cases, maintaining different signature generation/verification system for each application 106, 108, 110 can get cumbersome and confusing.

According to one embodiment, signature generation and verification is conducted for software applications 106, 108 and 110 by the digital signature module 160 rather than by the applications themselves. In operation, software applications 106, 108, 110 can register with the digital signature module 160 to indicate that they require it to sign and/or verify messages for them. To that end, the software applications 106, 108, 110 include a signature application 127. In one embodiment, the signature application 127 is the same or similar on each software application 106, 108, 110. The signature application 127 does not generate or authenticate signatures. Rather, when it determines that a signature needs to be added or verified, it requests that the digital signature module 160 cause the required result to occur.

For example, assume that application 106 needs to send a signed message to application 108. The signature application 127 in application 106 causes the message (possibly encrypted) to be delivered to the digital signature module 160. The signature generation module 162 then causes the message to be digitally signed. Signing can include encrypting the contents (or a hashed version of the contents) of the message utilizing the private key for application 106. The signed message can be returned to application 106 and then forwarded to application 108.

Upon receipt of the signed message, the signature application 127 of application 108 causes the message to be authenticated by the digital signature module 160. In this example, authentication of the message can include applying the public key for application 106 to the signature. In general, authentication includes determining that the signature was generated by/for the sending application. To that end, the application 108 is a "subscriber" of application 106 as that term is used below. Thus, in order to verify signatures on behalf of application 108, the digital signature module 160 also needs to subscribe to application 106 because it will need a copy of the public key for application 106. An authenticated message may still need to decrypted and, as such, each application 106, 108, 110 can include a respective key store 116, 118, 120 for storing public keys distributed as described below.

In one embodiment, the digital signature module 160 includes a key store 166. The key store 166 includes private keys for each of the applications 106, 108, 110 that have requested that the digital signature module 160 handle signature generation functions for it. In more detail, an application 106, 108, 110 can register with the digital signature module 160. This registration causes the signature application 127 to be provided to the application. The registration also causes the digital signature module 160 to generate a private/public key pair for the application. The private key can be stored in the key store 166 and the public key can be registered with the management console 102 as described below. The registration can be requested by the application or by the digital signature module 160. Of course, the public key could also be stored in the key store 166.

In some cases, an application can receive signed messages from an application that is not registered with the digital signature module 160. In such a case, the digital signature module 160 may not have the public/private keys for the sending application. In such a case, the signature module 160 may need to subscribe to the sending application in order to verify the message. In addition, the digital signature module 160 can also subscribe to the public keys it generated/caused to be registered to ensure that it has current copies of the private and public keys as described more fully below.

According to one embodiment, the management console 102 is configured to manage the exchange of keys between software applications 106, 108, 110 and digital signature module 160. As such, in one embodiment the management console 102 is coupled to a public key store 112 that stores public keys for some or all of the software applications 106, 108, 110 and any information associated with the stored public keys. The public keys can be received from the applications themselves or from the digital signature module 160. The associated information can include, for example, identification of other software applications that are allowed to receive the public key, when the key expires, and the like.

In general, the central key store 112 is a database and could be included within or be a separate entity from the management console 102. While the central key store 112 is shown directly coupled to the management console 102 in FIG. 1, it shall be understood that the connection could be through the communications network 104 in an alternative embodiment. In one embodiment, the central key store 112 is implemented as a database utilizing a lightweight directory access protocol (LDAP). In one embodiment, the management console 102 is coupled to a user terminal 114 that allows a user (e.g., a system administrator) to provide information to the management console 102. In one embodiment, the system administrator provides the management console 102 with information about particular software applications that can register/store their public key on the management console 102 or that can use the management console 102 to generate a key pair and store the resulting public key. The generation of key pairs can be implemented in a known manner. In an alternative embodiment, the information about particular software applications that can utilize the management console 102 can be received from other sources.

An example of the operation of the system 100 is informative. Suppose that the first software application 106 is to be added to the system 100 that already includes the second and third software applications 108, 110. Utilizing the user terminal 114, a user, such as a system administrator, creates a new entry in the management console 102 for the first software application 106. The entry may include, for example, the location of the first software application 106 (e.g., server name) and the name of the first software application 106. The name can be descriptive of the application type or specific to the particular software application. In one embodiment, the entry may later be provided with a listing of all other software applications that have subscribed to the first software application 106. In one embodiment, the entry may also or alternatively include a listing of other software applications that the first software application 106 has subscribed to.

In this example, after the entry is created, the management console 102 assigns an identification code to the first software application 106. This code may be provided electronically or manually to the first software application 106 before or when the first software application 106 is installed.

The first software application 106 includes, in one embodiment, a registration module 128. The registration module 128 causes the first software application to become registered with the management console 102. In one embodiment, the process of registration can include causing the first software application 106 to identify itself to the management console 102 utilizing the identification code described above. In one embodiment, registration also includes providing a public key to the management console 102. In such an embodiment, the registration module 128 causes the first software application 106 to request and receive a key pair from the digital signature module 160. Regardless of how created, the public key for the first software application 106 is stored by the management console 102 and related to the entry maintained by the management console 102 for the first software application 106. In this manner, the public key is associated with a particular software application, not with the server on which the application resides. The private key can be maintained, for example, in the key store 166 of the digital signature module 160.

As illustrated in FIG. 1, the second software application 108 and the third software application 110 also include registration modules 130, 132, respectively. These registration modules operate in the same or similar manner as registration module 128 in one embodiment.

Suppose now that the first software application 106 needs to communicate with the second software application 108. In one embodiment, first software application 106 presents a subscription request to the management console 102. The subscription request can identify the second software application 108 by name, type or identification number or a combination thereof. Assuming that the first software application 106 is authorized to communicate with the second software application 108, the subscription request is granted and the public key for the second software application 108 is provided to the first software application 106.

In one embodiment, the digital signature module 160 makes a similar type of subscription request for each public key that it registers with the management console 102. The digital signature module 160 can also register to receive public keys for any application that sends a signed message to an application for which it is verifying signatures. Whether the first software application 106 or the digital signature module 160 is authorized depends on information provided when the entry in the management console 102 for the second software application 108 was created. In addition, the granting of the subscription request causes one or both of: 1) the subscription to be stored in the entry for the first software application 106; and 2) the subscription to be stored in the entry for the second software application 108; to occur.

In one embodiment, the management console 102 includes a key expiration module 152. The key expiration module 152 monitors the expiration of public keys stored by the management console 102 (e.g., in the public key store 112) and provides an indication that the key of particular application is about to expire to the application. The particular application can then let the key expire, extend the key, or provide a new key. In the event that it provides a new key, the management console 102 can determine the other applications that have subscribed to the application and provide them with the new public key. One of ordinary skill will realize that the determination can be made in different manners depending on how subscriptions are stored.

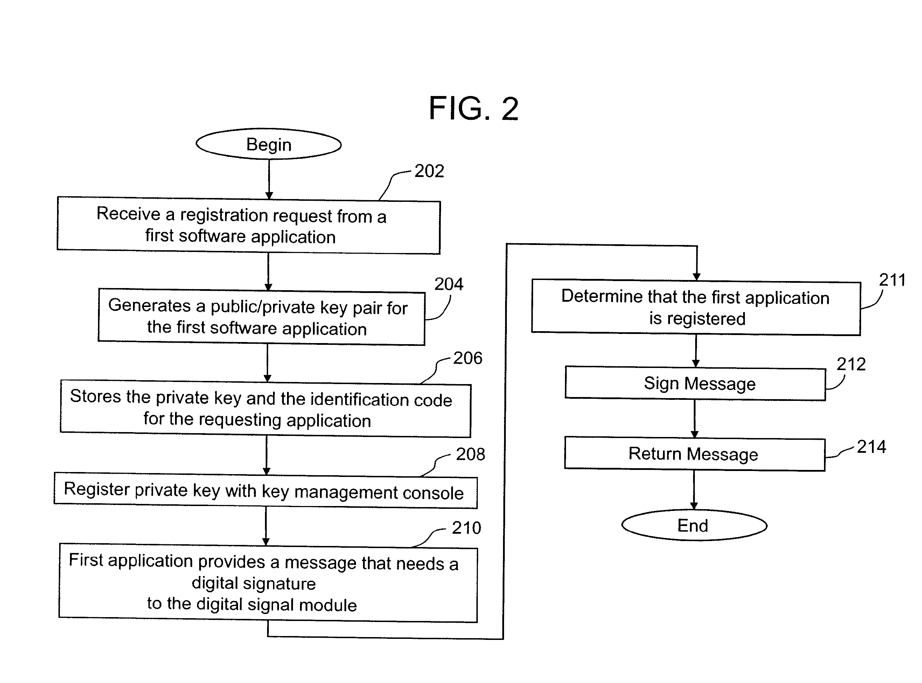

FIG. 2 is a flow chart illustrating a method according to one embodiment. The flow chart illustrated in FIG. 2 is an example, from the perspective of the digital signature module 160 of FIG. 1, of a method of generating signatures in a system including distributed software applications according to one embodiment. The method of this embodiment includes block 202 where a registration request from a first software application of the distributed software applications is received at the digital signature module. At block 204, the digital signature module generates a public/private key pair for the first software application. At block 206, for the requesting application, the digital signature module stores the private key and the identification code for the requesting application. The identification code can be the same identification code provided, for example, by the key management system 102 of FIG. 1. At block 208 the digital signature module causes the public key to be registered with the key management console such that it associated with the identification code.

At block 210 the first application provides a message that needs a digital signature to the digital signal module. The application can identify itself in any manner and, in one embodiment, identifies itself by the identification number described above. Optionally, at block 211, the digital signal module determines that the requesting (e.g., first) application is registered and at block 212, causes the message to be digitally signed. The processing at bock 212 can generates signatures based on the private key associated with the requesting application and the message. At block 214, the message is returned to the requesting application where it can be further processed or simply transmitted to another application.

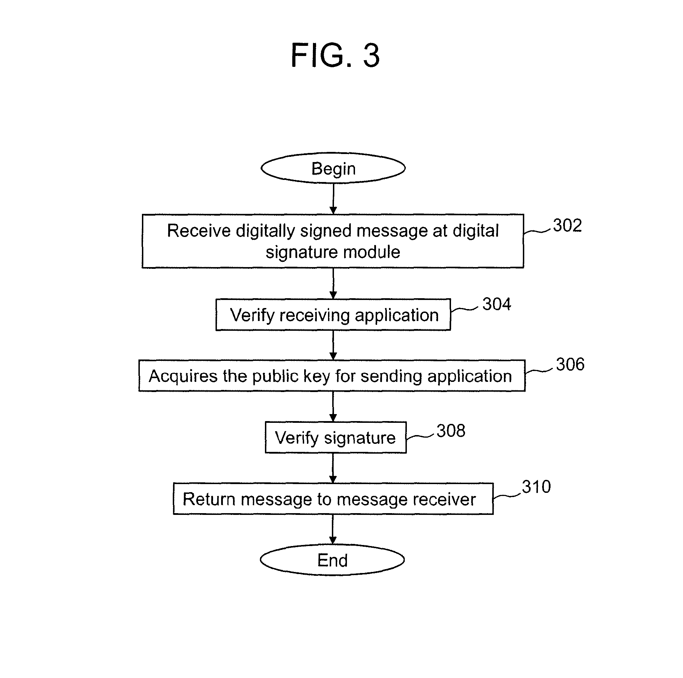

FIG. 3 is a flow chart showing method of verifying the digital signature associated with a message. The method includes block 302 where a message with a digital signature is received at the digital signature module 160 of FIG. 1 from an application that received the message (receiving application). The message was received from a sending application. The digital signature module verifies, at block 304, that the receiving application is registered with it.

Following verification, the digital signature module acquires a copy of the public key for the sending application at block 306. The acquisition could occur in different manners. For instance, in some cases, the digital signature module may already have a copy of the public key in its key store. In other embodiments, the digital signature module may need to subscribe to the sending application via the key management console 102 (FIG. 2) to receive a copy of the public key. In another embodiment, the digital signature module may request the public key from one or both of the sending application and the receiving application depending on whether the receiving application already has a copy of the public key for the sending application.

At block 308 the signature on the message is verified utilizing the public key and then returned to the receiving application at block 310.

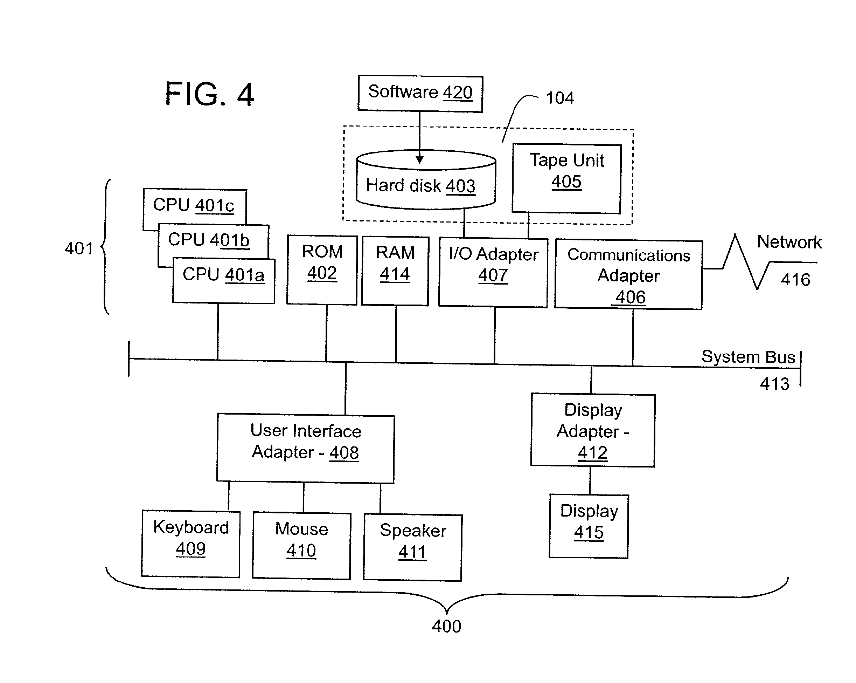

Referring now to FIG. 4, there is shown an embodiment of a processing system 400 for implementing the teachings herein. The processing system 400 is an example of a server or other computing device on which the management console 102 and the digital signature module may be implemented or on which the software applications 106, 108, 110 can be run on (FIG. 1).

In this embodiment, the system 400 has one or more central processing units (processors) 401 a, 401 b, 401 c, etc. (collectively or generically referred to as processor(s) 401). In one embodiment, each processor 401 may include a reduced instruction set computer (RISC) microprocessor. Processors 401 are coupled to system memory 414 and various other components via a system bus 413. Read only memory (ROM) 402 is coupled to the system bus 413 and may include a basic input/output system (BIOS), which controls certain basic functions of system 400.

FIG. 4 further depicts an input/output (I/O) adapter 407 and a network adapter 406 coupled to the system bus 413. I/O adapter 407 may be a small computer system interface (SCSI) adapter that communicates with a hard disk 403 and/or tape storage drive 405 or any other similar component. I/O adapter 407, hard disk 403, and tape storage device 405 are collectively referred to herein as mass storage 404. A network adapter 406 interconnects bus 413 with an outside network 416 (e.g., communication network 104 of FIG. 1) enabling system 400 to communicate with other such systems. A screen (e.g., a display monitor) 415 can be connected to system bus 413 by display adaptor 412, which may include a graphics adapter to improve the performance of graphics intensive applications and a video controller. In one embodiment, adapters 407, 406, and 412 may be connected to one or more I/O buses that are connected to system bus 413 via an intermediate bus bridge (not shown). Suitable I/O buses for connecting peripheral devices such as hard disk controllers, network adapters, and graphics adapters typically include common protocols, such as the Peripheral Components Interface (PCI). Additional input/output devices are shown as connected to system bus 413 via user interface adapter 408 and display adapter 412. A keyboard 409, mouse 410, and speaker 411 are all interconnected to bus 413 via user interface adapter 408, which may include, for example, an I/O chip integrating multiple device adapters into a single integrated circuit.

It will be appreciated that the system 400 can be any suitable computer or computing platform, and may include a terminal, wireless device, information appliance, device, workstation, mini-computer, mainframe computer, server, personal digital assistant (PDA) or other computing device. It shall be understood that the system 400 may include multiple computing devices linked together by a communication network. For example, there may exist a client-server relationship between two systems and processing may be split between the two.

Any computer operating system may be utilized by the system 400. As illustrated, the system 400 also includes a network interface 406 for communicating over a network 416. The network 416 can be a local-area network (LAN), a metro-area network (MAN), or wide-area network (WAN), such as the Internet or World Wide Web.

As disclosed herein, the system 400 may include machine-readable instructions stored on machine readable media (for example, the hard disk 404) to execute one or more methods disclosed herein. As discussed herein, the instructions may be referred to as "software" 420. The software 420 may be produced using software development tools as are known in the art. The software 420 may include various tools and features for providing user interaction capabilities as are known in the art.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the invention are indicated in the clauses:
1. A digital signature management system for distributed software applications, the system comprising:
   a communication network;
   a digital signature module coupled to the communication network; and
   one or more software applications coupled to the communication network, each of the one or more software applications including an identification code and a signature application that requests that the digital signature module signs messages on behalf of a software application in which it is included;
   wherein the digital signature module is configured to sign messages it receives from a one of the one more software applications based on a private key associated with the one of the one or more software applications.
2. The system of clause 1, wherein at least one of the one or more software applications does not include systems or applications for signing messages with digital signatures.
3. The system of clause 1, wherein the signature application requests a key pair from the digital signature module, the key pair including a public key and a private key and further comprising:
   a management console coupled to at least some of the one or more software applications via the communication network, the management console configured to store the public key associated with a first software application of the one or more software applications and to provide the public key associated with the first software application to a second software application of the one or more software applications upon receiving a subscription request for the first software application from the second software application.
4. The system of clause 3, wherein the digital signature module is configured to subscribe to the first software application.

## Claims

1. A digital signature management system (100) for distributed software applications, the system (100) comprising:
a communication network (104);
a digital signature module (160) coupled to the communication network (104);
and
one or more software applications (106, 108, 110) coupled to the communication network (104), each of the one or more software applications (106, 108, 110) including an identification code and a signature application (127) that intercepts a digitally signed message received from a sending application (106, 108, 110) and provides it to the digital signature module (160);
wherein the digital signature module (160) is configured to verify the digital signature of messages it receives from the one more software applications (106, 108, 110).

2. The system (100) of claim 1, wherein at least one of the one or more software applications (106, 108, 110) does not include systems or applications for authenticating digital signatures.

3. The system (100) of either of claim 1 or 2, further comprising:
a registration module (128, 130, 132) that requests a key pair from a key pair provider (160), the key pair including a public key and a private key; and
a management console (102) coupled to at least some of the one or more software applications (106, 108, 110) via the communication network (104), the management console configured to store the public key associated with a first software application (106) of the one or more software applications (106, 108, 110) and to provide the public key associated with the first software application (106) to a second software application (108) of the one or more software applications (106, 108,110) upon receiving a subscription request for the first software application (106) from the second software application (108).

4. The system (100) of claim 3, wherein the digital signature module (160) is the key pair provider.

5. The system (100) of either of claim 3 or 4, wherein the digital signature module (160) is configured to subscribe to the second application (108).

6. The system (100) of claim 5, wherein the digital signature module (160) is configured to verify a signed message received by the first application (106) from the second application (108) based on a public key for the second application (108) received from the key management console (102).

7. The system (100) of any preceding claim, wherein each of the one or more software applications (106, 108, 110) are located on different servers.

8. The system (100) of any of claims 1 to 6, wherein the at least two of the one or more software applications (106, 108, 110) are located on a same server.

9. A method of authenticating digital signatures in a distributed computing system (100) including distributed software applications (106, 108, 110), the method comprising:
receiving (302), at a digital signature module (160), a digitally signed message from a first software application (106), the digitally signed message including a digital signature that identifies a second software application (108);
verifying (308) the digital signature at the digital signature module (160) based on a public key related to the second software application (108); and
returning (310) the digitally signed message to the first software application (106);
wherein the public key is received from a key management system operated on a different server than the first software application (106).

10. The method of claim 9, further comprising:
sending a subscription request for the second software application (108) from the digital signature module (160) to the key management system.
